# EUROPÄISCHE PATENTANMELDUNG

(11) **EP 2 548 427 A1**
(43) Veröffentlichungstag der Anmeldung: **23.01.2013**
(21) Anmeldenummer: 12401153.7
(22) Anmeldetag: 16.07.2012
(51) Int. Cl.: A01B 61/04

(54) **Aufhängungsvorrichtung**

(30) Priorität: 22.07.2011 DE 102011052055
(71) Anmelder: Amazonen-Werke H. Dreyer GmbH & Co. KG, 49205 Hasbergen (DE)
(72) Erfinder: Pollex, Jorg, 04229 Leipzig (DE); Sosnicki, Jürgen, 04155 Leipzig (DE)

(57) **Zusammenfassung**

Aufhängungsvorrichtung für einer Landmaschine zur Aufhängung eines Maschinenteils mit zumindest einem das Maschinenteil tragenden Schwenkarm (5) sowie einem sich vorzugsweise quer zur Arbeitsrichtung erstreckenden Schwenkarmträger (2), an dem der Schwenkarm (5) mit einem Lagerkörper (6) schwenkbar gelagert ist, wobei der Lagerkörper (6) den Schwenkarmträger (2) umgreift und zwischen dem Lagerkörper (6) unter den davon umgriffenen Abschnitt des Schwenkarmträgers (2) zumindest ein elastisches Lagerelement (7) vorgesehen ist, dass sich mit seiner Längsachse im Wesentlichen parallel zu der Schwenkachse des Schwenkarmes (5) und der Längsachse des Schwenkträgers (2) erstreckt und durch Schwenkbewegungen des Schwenkarmes (5) eine zumindest teilweise Verformung erfährt. Um eine preiswertere Ausgestaltung der elastischen Lagerelemente /7) zu schaffen, welche ebenfalls nicht aus der Lagerung heraus wandern, ist vorgesehen, dass zwischen dem Lagerkörper (6) und/oder dem Schwenkarmträger (2) einerseits und dem Lagerelement (7) andererseits eine Zwischeneinlage (9) angeordnet ist, welche den Reibungskoeffizienten zwischen dem Lagerkörper (6) und/oder dem Schwenkarmträger (2) einerseits und dem Lagerelement (7) andererseits erhöht.

## Beschreibung

Die Erfindung betrifft eine Aufhängungsvorrichtung gemäß des Oberbegriffes des Patentanspruches 1.

Eine derartige Aufhängungsvorrichtung ist beispielsweise durch die EP 1 880 590 B1 bekannt. Bei dieser Aufhängungsvorrichtung sind die elastischen Lagerelemente gegenüber den seitlichen Bereichen im mittleren Bereich eingeschnürt ausgebildet. Diese Ausgestaltung hat sich in der Praxis bewährt, weil hierdurch erreicht wird, dass die elastischen Lagerelemente nicht aus der Lagerung herauswandern.

Die Herstellung dieser mittig eingeschritten Lagerelemente ist jedoch relativ kostenaufwändig.

Der Erfindung liegt die Aufgabe zu Grunde, eine preiswertere Ausgestaltung der elastischen Lagerelemente zu schaffen, welche ebenfalls nicht aus der Lagerung herauswandern.

Diese Aufgabe wird erfindungsgemäß dadurch gelöst, dass zwischen dem Lagerkörper und/oder dem Schwenkarmträger einerseits und dem Lagerelement andererseits eine Zwischeneinlage angeordnet ist, welche den Reibungskoeffizienten zwischen dem Lagerkörper und/oder dem Schwenkarmträger einerseits und dem Lagerelement andererseits erhöht.

Infolge dieser Maßnahme wird durch die an dem elastischen Lagerelement zugeordnete Zwischeneinlage ein besseres verklemmen des Lagerelementes in dem Lagerkörper durch die Erzeugung eines erhöhten Druck und der daraus resultierenden höheren Reibung erreicht. Dieses wirkt dem möglichen Herauswandern der Lageelemente aus dem Lagerkörper entgegen.

Das bessere Verklemmen der Lagerelemente sowie eine Erhöhung der Reibung wird in einer Ausführung der Erfindung dadurch erreicht, dass die Zwischeneinlage als Antirutschmatte, gitterartiges Flächenelement und/oder Gitternetzstreifen ausgebildet ist.

In einer anderen Ausgestaltung der Erfindung ist vorgesehen, dass die Zwischeneinlage als zumindest ein auf das Lagerelement aufgeschobener 0-Ring ausgebildet ist.

In einer weiteren Ausgestaltung der Erfindung ist vorgesehen, dass die Zwischeneinlage als Klebemittel ausgebildet ist.

In einigen Einsatzfällen ist es sinnvoll, dass eine Vielzahl von ringförmigen Erhebungen nebeneinander auf der Oberfläche des Lageelementes angeordnet sind. Infolge dieser Maßnahme lässt sich der Widerstand gegen das Herauswandern des Lagerelementes aus dem Lagerkörper in einfacher Weise erhöhen.

Auch ist es möglich, dass die Erhebungen auf der Oberfläche des Lagerelementes streifenförmig, punktartig oder gitternetzartig ausgebildet sind.

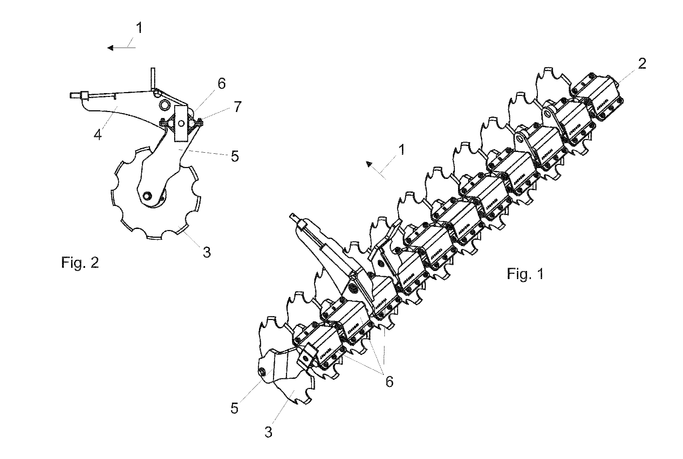

Weitere Einzelheiten der Erfindung sind der Beispielsbeschreibung und den Zeichnungen zu entnehmen. Hierbei zeigen
- Fig. 1: die an einem Schwenkarmträger mittels der Aufhängungsvorrichtungen angeordneten als Scheiben ausgebildete Bodenbearbeitungswerkzeuge einer Scheibenegge in perspektivischer Darstellung,
- Fig. 2: die an einem Schwenkarmträger mittels der Aufhängungsvorrichtungen angeordneten als Scheiben ausgebildete Bodenbearbeitungswerkzeuge einer Scheibenegge gemäß Fig. 1 in Seitenansicht,

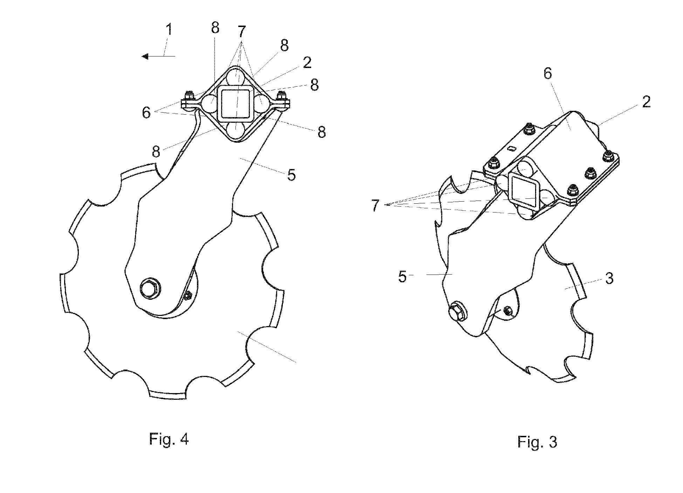

- Fig. 3: eine an einem Schwenkarmträger mittels einer Aufhängungsvorrichtung angeordnetes als Scheibe ausgebildetes Bodenbearbeitungswerkzeug einer Scheibenegge in perspektivischer Darstellung und vergrößertem Maßstab,
- Fig. 4: das an einem Schwenkarmträger mittels einer Aufhängungsvorrichtung angeordnetes als Scheibe ausgebildetes Bodenbearbeitungswerkzeug einer Scheibenegge in Seitenansicht gemäß Fig. 3,
- Fig. 5: der an einem Schwenkarmträger anzuordnende halbe Lagerkörper gemäß den Fig. 1 bis 4 mit zwei elastischen Lagerelementes und einer Zwischeneinlage in perspektivischer Darstellung,
- Fig. 6: ein weiterer an einem Schwenkarmträger anzuordnende halbe Lagerkörper gemäß den Fig. 1 bis 4 mit zwei elastischen Lagerelementes in perspektivischer Darstellung,
- Fig. 7: ein elastisches Lagerelement gemäß der Fig. 6 in Vorderansicht,
- Fig. 8: das elastische Lagerelement gemäß der Fig. 7 in perspektivischer Darstellung und
- Fig. 9: der an einem Schwenkarmträger anzuordnende halbe Lagerkörper gemäß den Fig. 1 bis 4 mit zwei elastischen Lagerelementes und einer Klebeschicht als Zwischeneinlage in perspektivischer Darstellung.

An einem nicht dargestellten Rahmen einer als Kurzscheibenegge ausgebildeten Landmaschine sind zwei quer zur Fahrtrichtung 1 verlaufende Schwenkarmträger 2, von denen jedoch nur einer dargestellt ist, beabstandet hintereinander angeordnet. Der als Schwenkarmträger 2 ausgebildete Querbalken zur Aufhängung jeweils eines Maschinenteils, welches als Scheibe 3 ausgestaltetes Bodenbearbeitungswerkzeug ausgebildet ist, ist mittels geeigneter Zwischenelemente 4 an dem Maschinenrahmen angeordnet. Das als Scheibe 3 ausgebildete Bodenbearbeitungswerkzeug ist jeweils mittels eines Schwenkarmes 5 über einen Lagerkörper 6 an dem Schwenkarmträger 2 befestigt. Der Lagerkörper 6 umgreift den Querbalken 2. Zwischen dem Lagerkörper 6 und dem davon umgriffenen Abschnitt des Querbalkens 2 sind vier elastische Lagerelemente 7 angeordnet. Die elastischen Lagerelemente 7 sind beispielsweise als dicke gummischnurartige langgestreckte Wülste ausgebildet und erstrecken sich mit ihrer Längsachse parallel zu der Schwenkachse des Schwenkarmes 5 und der Längsachse des Querbalkens 2. Der Schwenkarm 5 mit dem Bodenbearbeitungswerkzeug 3 und dem Lagerkörper 6 können aufgrund der elastischen Lagerelementes 7 um die Längsachse des Querbalkens 2 gegen die Kraft der Lagerelementes 7, welche durch die Verformung der elastischen Lagerelemente7 entsteht, schwenken.

Außerdem kann der Schwenkarm 5 mit dem Bodenbearbeitungselement 3 im begrenzten Umfang ebenfalls durch elastische Verformung der elastischen Lagerelemente 7 seitlich ausweichen. Die Lagerkörper 6, welche den Schwenkarmträger 2 umgreifen, weisen einen vierkantförmigen Querschnitt auf. Ebenfalls weist der Schwenkarmträger 2 ein vierkantförmigen Querschnitt auf, wobei der Lagerkörper gegenüber dem Profil der Schwenkarmträger 2, in der Ausgangsstellung, um 45° verdreht ist, so dass sich der Zwischenraum zwischen dem Lagerkörper 6 und dem davon umgriffenen Schwenkarmträger 2 in vier Lagerelementekammern 8 untergliedert. In diesen vier Lagerelementekammern 8 ist jeweils ein elastisches Lagerelement 7 angeordnet.

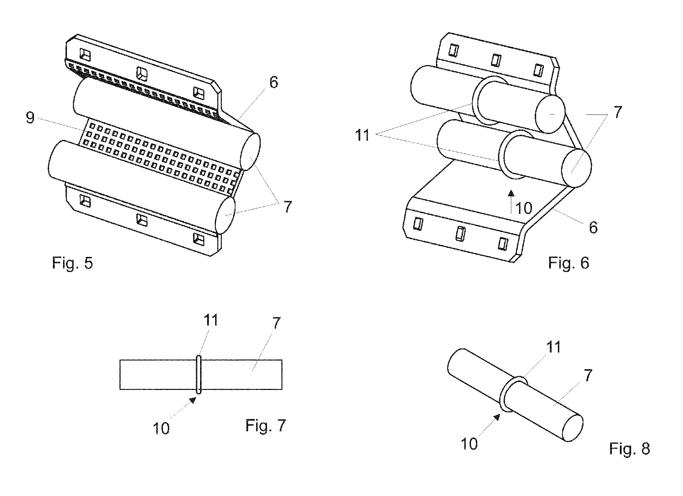

Gemäß der Fig. 5 ist zwischen den elastischen Lagerkörpern 7 und dem Schwenkarmträger 6 eine gitternetzartige Zwischeneinlage 9 angeordnet. Diese Zwischeneinlage 9 erhöht den Reibungskoeffizienten zwischen dem Lagerkörper 6 und/oder dem Schwenkarmträger 5 einerseits und dem elastischen Lagerelement 8. Die Zwischeneinlage 9 ist als Antirutschmatte ausgebildet. Die Antirutschmatte 9 kann ein gitterartiges Flächenelement oder ein Gitternetzstreifen sein.

Gemäß den Fig. 6 bis 8 ist jeweils auf der Oberfläche des elastischen Lagerelementes 7 im Bereich des Lagerkörpers 6 eine als Zwischeneinlage zumindest eine Erhebung 10 angeordnet. Diese ringförmige Erhebung 10 ist als ein auf das Lagerelement 7 aufgeschobenes Ringelement, nämlich einem O-Ring 11 ausgebildet.

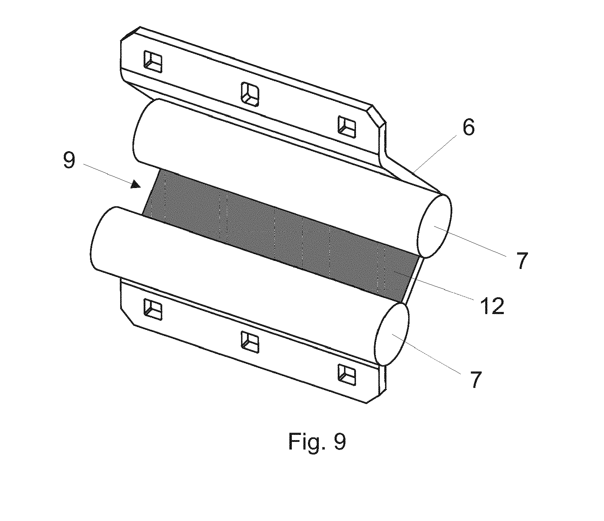

Gemäß der Fig. 9 ist zwischen den elastischen Lagerkörpern 7 und dem Schwenkarmträger 6 eine als Klebeschicht 12 ausgebildete Zwischeneinlage 9 angeordnet. Die Klebeschicht 12 wird von einem Klebemittel gebildet Diese Zwischeneinlage 9 erhöht den Reibungskoeffizienten zwischen dem Lagerkörper 6 und/oder dem Schwenkarmträger 5 einerseits und dem elastischen Lagerelement 8.

Durch alle Zwischeneinlagen 9, 10, 11, 12, wie vorbeschriebenen sind, die auf der Oberfläche eines Lagerelementes 7 angeordnet sind, wird erreicht, dass die Lagerelemente 7 nicht oder nur sehr schwierig aus dem Lagerkörper 6 herauswandern können. Diese Zwischeneinlagen 9, 10, 11, 12wirken also alle dem möglichen herauswandern der Lagerelemente 7 aus den Lagerkörpern 6 heraus entgegen.

## Patentansprüche

1. Aufhängungsvorrichtung an einer Landmaschine zu Aufhängung eines Maschinenteils, insbesondere eines Bodenbearbeitungswerkzeuges, mit zumindest einem das Maschinenteil tragenden Schwenkarm sowie einem sich vorzugsweise quer zur Arbeitsrichtung erstreckenden Schwenkarmträger, an dem der Schwenkarm mit einem Lagerkörper schwenkbar gelagert ist, wobei der Lagerkörper den Schwenkarmträger umgreift und zwischen dem Lagerkörper unter den davon umgriffenen Abschnitt des Schwenkarmträgers zumindest ein elastisches Lagerelement vorgesehen ist, dass sich mit seiner Längsachse im Wesentlichen parallel zu der Schwenkachse des Schwenkarmes und der Längsachse des Schwenkträgers erstreckt und durch Schwenkbewegungen des Schwenkarmes eine zumindest teilweise Verformung erfährt, **dadurch gekennzeichnet, dass** zwischen dem Lagerkörper (6) und/oder dem Schwenkarmträger (5) einerseits und dem Lagerelement (7) andererseits eine Zwischeneinlage (9, 10, 11, 12) angeordnet ist, welche den Reibungskoeffizienten zwischen dem Lagerkörper (6) und/oder dem Schwenkarmträger (5) einerseits und dem Lagerelement (7) andererseits erhöht.

2. Aufhängungsvorrichtung nach Anspruch 1, **dadurch gekennzeichnet, dass** die Zwischeneinlage (9) als Antirutschmatte, gitterartiges Flächenelement (9) und/oder Gitternetzstreifen ausgebildet ist.

3. Aufhängungsvorrichtung nach Anspruch 1, **dadurch gekennzeichnet, dass** die Zwischeneinlage (10) als zumindest ein auf das Lagerelement aufgeschobener 0-Ring (11) ausgebildet ist.

4. Aufhängungsvorrichtung nach Anspruch 1, **dadurch gekennzeichnet, dass** die Zwischeneinlage (12) als Klebemittel ausgebildet ist.
